# EUROPEAN PATENT SPECIFICATION

(11) **EP 1 327 786 B1**
(45) Date of publication and mention of the grant of the patent: **04.01.2012**
(21) Application number: 02755702.4
(22) Date of filing: 31.07.2002
(51) Int. Cl.: F16C 29/06, F16H 25/22

(54) **LINEAR ACTUATOR**
LINEARANTRIEB
VERIN LINEAIRE

(30) Priority: 30.08.2001 JP 2001262222
(43) Date of publication of application: 16.07.2003
(73) Proprietor: THK CO., LTD., Shinagawa-ku, Tokyo 141-0031 (JP)
(72) Inventor: IIDA, Katsuya, c/o THK Co., Ltd., Kofu Works, Nakakoma-gun, Yamanashi 409-3801 (JP); KADONO, Toshiaki, c/o THK Co., Ltd., Kofu Works, Nakakoma-gun, Yamanashi 409-3801 (JP); KAWAKAMI, Takeomi, c/o THK Co., Ltd., Kofu Works, Nakakoma-gun, Yamanashi 409-3801 (JP); FURUSAWA, Ryuji, c/o THK Co., Ltd., Kofu Works, Nakakoma-gun, Yamanashi 409-3801 (JP)
(74) Representative: Viering, Hans-Martin
(86) International application number: PCT/JP2002/007771
(87) International publication number: WO 2003/021120

(56) References cited:
- EP-A1- 1 055 834
- JP-A- 11 315 835
- JP-A- 59 137 616
- JP-A- 2000 120 825
- JP-A- 2000 291 766
- JP-A- 2001 227 614
- US-A- 4 934 202

## Description

### Technical Field

The present invention relates to a linear actuator according to the preamble of claim 1. Generally, the present invention relates to an actuator comprising a track member having substantially U-shape in section and a movable member integrally provided with guide portions formed on both side surfaces thereof and a ball screw portion formed in a central portion thereof.

### Background of The Invention

A linear actuator of the initially-mentioned type is known, e.g., from JP 2000-291766A. As shown in FIG. 11, there is known a linear actuator provided with an outer rail 1 having substantially U-shape and an inner block 2 disposed inside the outer rail 1 and integrally provided with guide portions 2a, 2a formed on both side surfaces thereof and a ball screw portion 2b formed in a central portion thereof.

The guide portions 2a, 2a have the following structures. The outer rail 1 has a pair of opposing inner wall sections 1a, 1a, on which upper and lower two rows of ball rolling grooves 1b, 1b are formed, respectively. On the other hand, the inner block 2 disposed inside the outer rail 1 has both side surfaces, on which loaded ball rolling groove 2c, 2c are formed so as to oppose to the ball rolling grooves 1b, 1b, and a number of balls 3, 3, --- are disposed to be movable between the mutually opposing ball rolling grooves 1b, 1b and loaded rolling grooves 2c, 2c.

The screw portion 2b, on the other hand, has the following structure. A screw shaft 4 penetrates the central portion of the inner block 2. The screw shaft 4 is formed, on its outer peripheral surface, with a spiral ball rolling groove. A spiral loaded ball rolling groove corresponding to this spiral ball rolling groove is formed on a through hole of the inner block 2.

### Disclosure of The Invention

Since such a linear actuator has a integrally-provided guide portions 2a, 2a and ball screw portion 2b, the actuator provides functions, as actuator, of high rigidity and high performance in the minimum space. Accordingly, such linear actuator has been mainly utilized for a semiconductor manufacturing system or a liquid crystal manufacturing system, or under a clean environment in a medical or like equipment. For such clean environment, it is required to generate less dust or less noise, or like.

In order to reduce the dust to be generated from the actuator, a driving portion including a guide member of the actuator is covered by a case, to which air-sucking may be further conducted. However, even if the driving portion including the guide member is covered by the case, dust is yet generated from a sliding portion, therefore it is not fundamentally solution.

Moreover, a preload is applied to the ball screw portion 2b of the linear actuator for enhancing the positioning performance. The inner block 2 of the linear actuator is, however, different from a ball screw composed of a screw shaft and a nut, and has a structure in which the guide portions 2a, 2a and the ball screw portion 2b are integrally formed. According to such structure, in a manufacturing process, there is not adopted a method or system for applying a preload, as like a general ball screw, by displacing a phase of a ball rolling groove formed to the nut, and in substitution therefor, there is adopted an over-size preloading method or system in which over-sized balls, each having a diameter slightly larger than a gap between the screw shaft 4 and the inner block 2, are arranged. In the case where this over-size preloading method is adopted, a spacer ball, having a diameter slightly smaller than that of the over-size ball, is arranged between the over-sized balls for smooth circulation of the balls. However, the arrangement of such spacer balls reduces the number of the balls to which load is applied, and load in the axial direction to be loaded will be reduced.

Then, the present invention has an object to provide a linear actuator which can realize reduced dust generation and low noise generation and providing a large load in the axial direction to be loaded. The present invention provides a linear actuator according to claim 1. Further embodiments of the linear actuator are described in the dependent claims.

The present invention will be explained hereunder, in which although reference numerals on the accompanying drawings are added with parentheses in order for easy understanding of the invention, the present invention is not limited to an embodiment illustrated in the drawings by the added reference numerals.

The inventor of the subject application conceived to locate spacers between rolling members at a guide portion and a screw (thread) portion, the spacer having recessed portions, on both end portions of a rolling member, each having a shape corresponding to a curved surface of the rolling member, in order to prevent metal contact of the rolling members and to perform smoothly arranged movement of the rolling members. Furthermore, in view of the fact that circulation motion of the rolling member at the guide portion is a two-dimensional motion in a plane in which a linear loaded rolling passage and a linear return passage are connected through a U-shaped direction changing passage and the circulation motion of the rolling member at the screw portion is a complicated spiral three-dimensional motion, there was conceived that a plurality of spacers arranged in the guide portion are connected to each other in series by means of belt-shaped member and a plurality of spacers arranged in the screw portion are, on the contrary, separated from each other, thus preventing the rolling members from contacting with the circulation passages surrounding the rolling members.

More specifically, the above object can be achieved by providing a linear actuator of the invention of claim 1, which comprises a track member (7), having U-shape in section, provided with inner wall surfaces (7a, 7a) opposing to each other, a movable member (8) disposed between the inner wall surfaces (7a, 7a) and a screw shaft (9) penetrating a through hole of the movable member (8), in which rolling member rolling portions (11) are formed on the inner wall surfaces of the track member (7); loaded rolling member rolling portions (19) are formed on both side surfaces of the movable member (8) so as to correspond to the rolling member rolling portions (11); rolling member return passages (C) extending in parallel to each other with a predetermined distance from the loaded rolling member rolling portions (19) and direction changing passages (B) each connecting the loaded rolling member rolling portions (19) and the rolling member return passages (C) are formed in the movable member so as to circulate the rolling members (28) rolling between the rolling member rolling portions (11) and the loaded rolling member rolling portions (19); a rolling member rolling portion (9a) in form of a spiral is formed on the outer peripheral surface of the screw shaft (9); a loaded rolling member rolling portion (15a) is formed in the wall surrounding the through hole formed in the movable member so as to correspond to the rolling member rolling portion (9a) of the screw shaft; and a rolling member return passage (E) for circulating the rolling member (33) rolling between the rolling member rolling portion (9a) of the screw shaft and the loaded rolling member rolling portion (15a) of the movable member (8) is formed in the movable member,
wherein a plurality of first spacers (30), each having, at both ends thereof, curved recessed portions (30a) corresponding to curved surface of the rolling member (28) are arranged between the rolling members, the plural first spacers (30) being connected in series by belt-shaped members (31, 31) having flexibility;
a plurality of second spacers (35), each having, at both ends thereof, curved recessed portions corresponding to the curved surface of the rolling member (33), are disposed between the rolling members for the screw shaft in a manner separated from each other; and
a holding member (17) extending along both side edges of the loaded rolling member rolling portion (19) is mounted to the movable member (8) for preventing the rolling member (28) held by the belt-shaped members (31, 31) and the first spacers (30) from coming off at a time when the movable member (8) is removed from the track member (7),
the holding member (17) is provided integrally with holding portions (24) extending along both side edges of the loaded rolling member rolling portion (19) and preventing the rolling member (28) held by the first spacers (30) from coming off at the time of removal of the movable member (8) from the track member (7), and provided with direction changing passage inner peripheral side constituting portions (25), constituting the inner peripheral side of the direction changing passage (B), disposed at longitudinal both end portions of the holding portions (24),
the holding portions (24) each include: a first holding piece (24c) for holding a lower side of the belt-shaped member (31) mounted to a lower side rolling member circulation passage; a second holding piece (24b) for holding the upper side of the belt-shaped member (31) mounted to the lower side rolling member circulation passage and mounted to an upper side rolling member circulation passage; and a third holding member (24a) for supporting the upper side of the belt-shaped member (31) mounted to the upper side rolling member circulation passage,
each of the direction changing passage inner periphery constituting members (25) has an approximately semicircular-arc shape,
each of the rolling member rolling portions (11) and the loaded rolling member rolling portions (19) is formed in a circular-arc in cross section,
each of the rolling member rolling portion (9a) of the screw shaft and the loaded rolling member rolling portion (15a) is formed in a gothic-arch in cross section,
four rows of loaded rolling member rolling passages constituted by the rolling member portions (11) and the loaded rolling member rolling portions (19) are formed,
contact angle lines of two upper side loaded rolling member rolling portions (11, 19) inclines so as to be directed obliquely upward towards the outside from the center of the linear actuator, and contact angle lines of two lower side loaded rolling member rolling portions (11, 19) inclines so as to be directed obliquely downward towards the outside from the center of the linear actuator.

According to the present invention, a plurality of spacers, having curved recessed portions corresponding to the curved surfaces of the rolling members, are disposed between the rolling members of the guide portion and the screw portion, so that the mutual contact between the respective metal rolling members can be prevented. Furthermore, since the plural spacers arranged in the guide portion, in which two-dimensional motion is carried out, are connected to each other in series by the belt-shaped members, the rolling members circulate in the constant track, and unnecessary contacting of the rolling members and their surrounding circulation passage can be prevented. In the screw portion, on the other hand, the twisting motion around the advancing direction is required as well as the two-dimensional and three-dimensional direction changing motions, so that unnecessary contacting of the rolling members and their surrounding circulation passage can be prevented by separating the spacers without connecting the spacers by the belt-shaped members. Thus, since the mutual contact of the rolling members and the unnecessary contacting of the rolling members and their surrounding circulation passage can be prevented, low generation of dust or like and low generation of noise can be realized.

Still furthermore, by arranging the spacers, each having curved recesses at its both end portions corresponding to the curved surface of the rolling member, the distance between the adjacent balls can be shortened in comparison with the case of using the spacer balls, for example. Accordingly, there is provided a linear actuator having a large axial load to be applied. E.g., the rolling member circulation passage composed of the loaded rolling member rolling portion (19, A), the rolling member return passage (C) and the direction changing passage (B) is provided with a guide portion (16a, 26) for guiding the belt-shaped member (31, 31).

Since the belt-shaped member is guided by the guide portions provided for the rolling member circulation passage, the belt-shaped member circulates in the more constant track, and hence, the plural spacers connected by the belt-shaped member and the rolling members disposed between the spacers can be also circulated in the more constant track.

E.g., a return passage constituting member (16) constituting the return passage (C), the direction changing inner periphery side constituting member (25) constituting the inner periphery side of the direction changing member (B), a direction changing outer periphery side constituting member (18) constituting the outer periphery side of the direction changing member (B), and the holding member (17) are each formed from a resin material independent from a body portion of the movable member (8).

Accordingly, in the guide portion, the metallic contact is only made between the rolling member and the rolling member rolling portion of the track and between the rolling member and the loaded rolling member rolling portion, so that the generation of dust and noise can be suppressed.

### BRIEF DESCRIPTION OF THE DRAWINGS

In the accompanying drawings:
FIG. 1 is a perspective view, partially cutaway, showing an essential portion of a linear actuator according to one embodiment of the present invention.
FIG. 2 is a developed perspective view of the linear actuator.
FIG. 3 is a plan view of the linear actuator.
FIG. 4 is a side view, partially in section, of the linear actuator.
FIG. 5 is a sectional view taken along the line V-V in FIG. 4.
FIG. 6 is a plan view of a retainer.
FIG. 7 is a side view of the retainer.
FIG. 8 is a sectional view taken along the line VIII-VIII in FIG. 7.
FIG. 9 is a perspective view of balls and spacers to be accommodated in a ball circulation passage of a screw portion.
FIG. 10 is a schematic view of the balls and the retainer to be accommodated in a ball circulation passage of a guide portion.

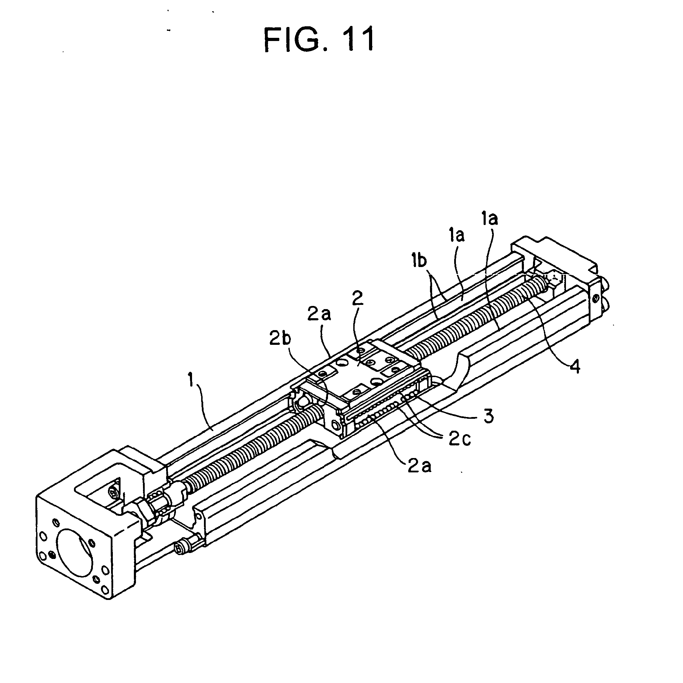

FIG. 11 is a perspective view of a linear actuator of conventional structure.

### BEST MODE FOR EMBODYING THE INVENTION

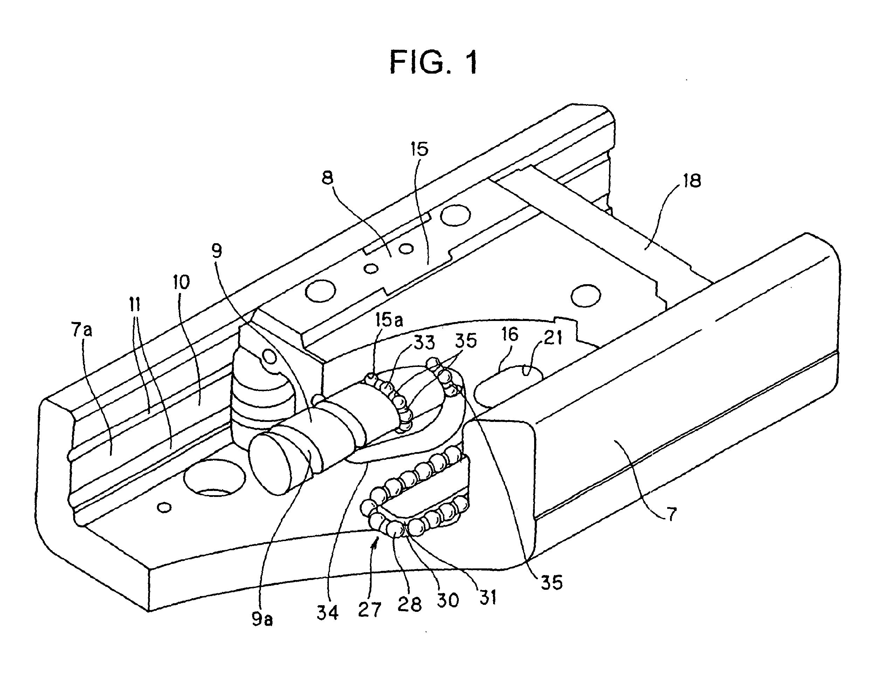

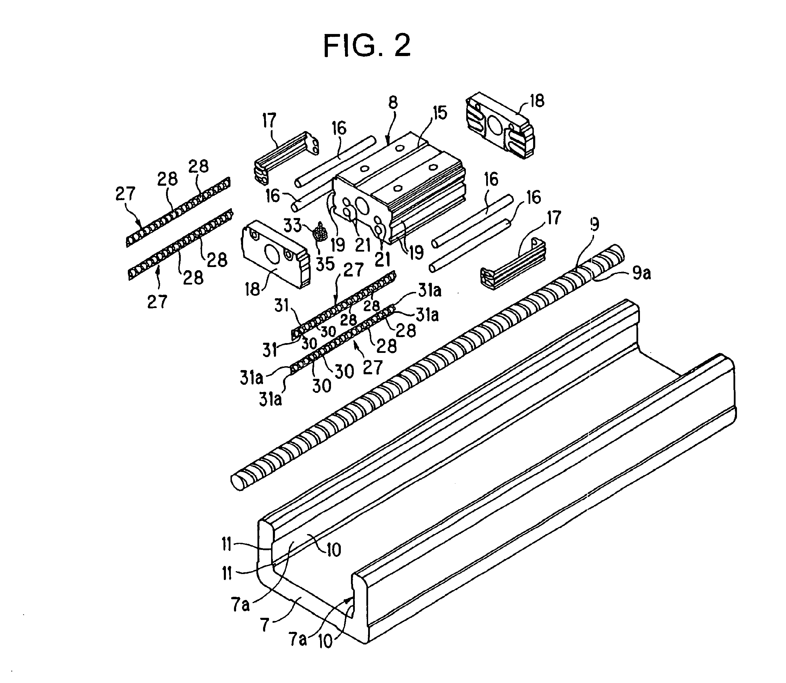

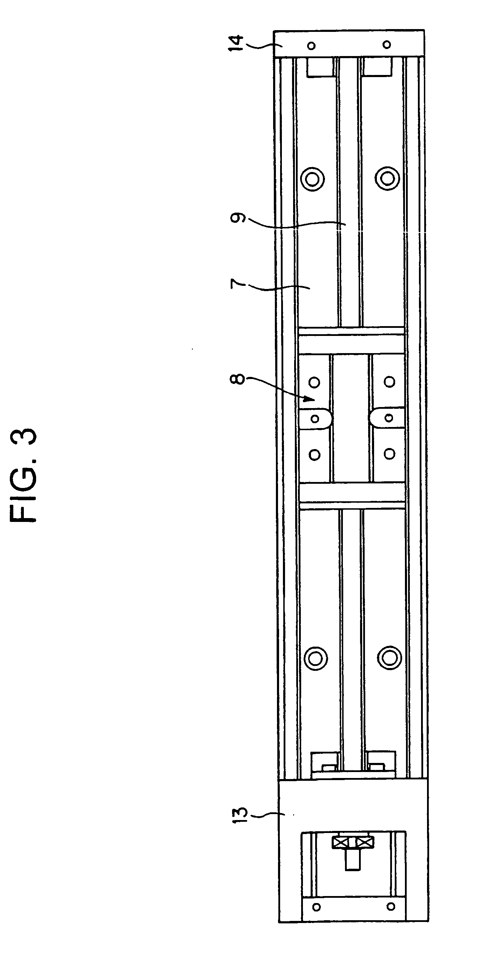

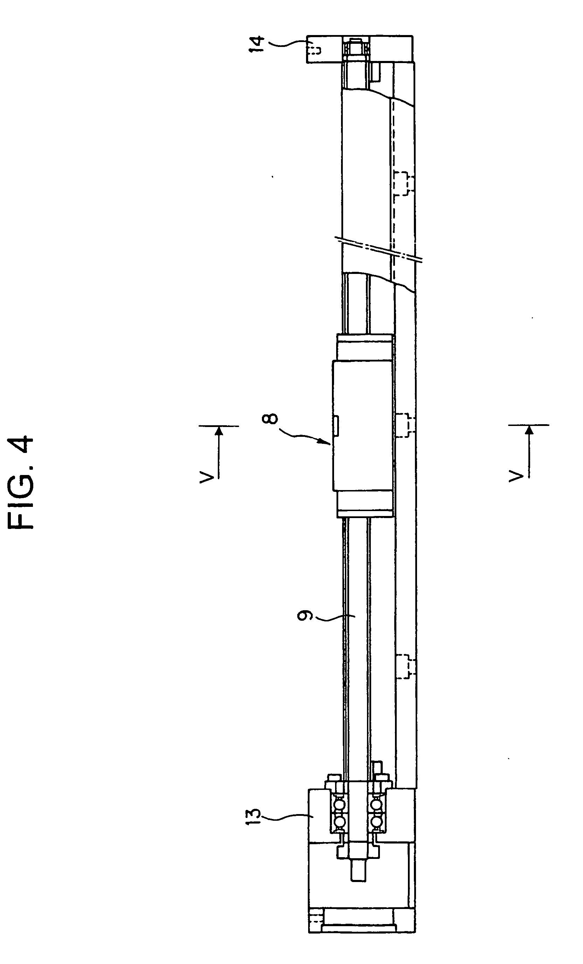

FIGs. 1 to 4 represent a linear actuator according to one embodiment of the present invention, in which FIG. 1 is a perspective view, partially cutaway, showing an essential portion of a linear actuator, FIG. 2 is a developed perspective view, FIG. 3 is a plan view and FIG. 4 is a side view, partially in section, of the linear actuator.

The linear actuator is provided with an outer rail 7 as track member having an approximately U-shaped section and an inner block 8 as movable member disposed inside the outer rail and having an integral structure of guide portions disposed on both side surface sides and a central ball screw portion. When a screw shaft 9 screw-engaged with the inner block 8 is rotated by a driving source such as electric motor, not shown, the inner block 8 is linearly moved along the outer rail 7. In such a linear actuator, since the guide portion and the ball screw portion are integrally composed, functions as actuator having high rigidity and high performance are attained in the minimum space.

Hereunder, the guide portion of the linear actuator will be first mentioned. The outer rail 7 has an approximately U-shaped structure having a pair of opposing inner wall surfaces 7a, 7a. The inner wall surfaces 7a, 7a are formed with recessed grooves 10, 10 so as to extend throughout the full length thereof, and two rows of ball rolling grooves 11, 11 are formed, as rolling member rolling portion, at upper and lower corner portions of each of the recessed grooves 10, 10, respectively. That is, upper and lower two ball rolling grooves 11, 11 are formed on each of the paired inner wall surfaces 7a, 7a of the outer rail 7 (totally, four ball rolling grooves). Each of the ball rolling groove 11 is composed of a so-called single circular arc groove having a curvature of its section slightly larger than a radius of a ball. As shown in FIGs. 3 and 4, housings 13 and 14 supporting a screw shaft 9 to be rotatable are disposed at longitudinal both end portions of the outer rail 7. The housings 13, 14 and the outer rail 7 are connected by fastening means such as bolts. A drive source is mounted to the housing 13 and a joint is disposed between the screw shaft and an output shaft of the drive source.

As shown in FIGs. 1 and 2, the inner block 8 is disposed so as to be clamped between the inner wall surfaces 7a, 7a of the outer rail 7. The inner block 8 comprises a block body 15, a resin mold member (including return passage constituting member 16 and holding members 17, 17) assembled with the block body 15 and end plates 18, 18 mounted to both end surfaces of the block body 15.

Loaded ball rolling grooves 19, 19 as upper and lower two rows of loaded rolling member rolling grooves are formed on both the side surfaces of the block body 15 so as to oppose respectively to the ball rolling grooves 11, 11 of the outer rail 7. That is, two loaded ball rolling groove 19, 19 are formed on each of the side surfaces of the block body 15 (i.e., totally four grooves 19). Each of these loaded ball rolling grooves is also composed of a so-called single circular arc groove having a curvature of its section slightly larger than the radius of the ball. A loaded ball rolling passage as a portion of ball circulation passage (rolling member circulation passage) in which the balls circulate is formed between each of the ball rolling grooves 11 of the outer rail 7 and each of the loaded ball rolling grooves 19 of the inner block 8.

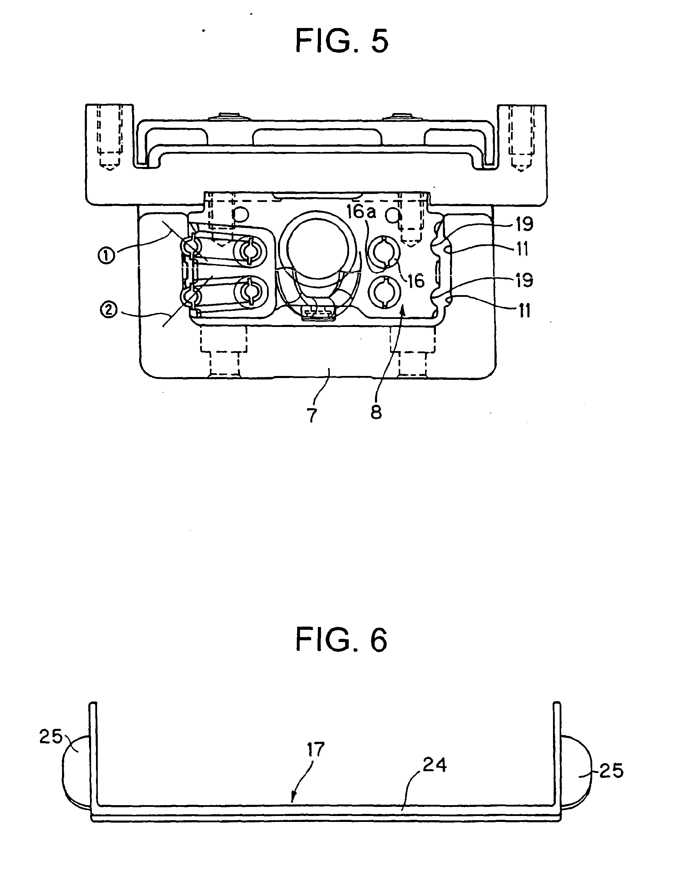

FIG. 5 shows a section of the linear actuator, and with reference to this FIG. 5, contact angle line of ball rows will be explained hereunder. The contact angle line means, herein, a line connecting a contact point of the ball and the ball rolling groove 11 of the outer rail 7 and a contact point of the ball and the loaded ball rolling groove 19 of the inner block 8. In this linear actuator, four rows of loaded ball rolling passages are formed, and accordingly, four contact angle lines exit. The upper two contact angle lines ① inclines by, for example, 45° from a horizontal line so as to be directed obliquely upward towards the outside from the center of the actuator and the lower two contact angle lines ② inclines by, for example, 45° from a horizontal line so as to be directed obliquely downward towards the outside from the center of the actuator. According to such structure, there is provided a linear actuator capable of bearing loads in four directions including radial direction (lower direction), opposite radial direction (upper direction) and horizontal direction (including lateral both directions).

As shown in FIGs. 1 and 2, in the block body, there are formed two through holes 21, 21 extending in parallel with a predetermined distance from the upper and lower two rows of loaded ball rolling grooves 19, 19, respectively, formed on both side portions of the block body. Return passage constituting members 16 formed from a resin material and constituting ball return passages are inserted into these through holes 21, respectively. On these return passage constituting members 16, there are formed guide grooves 16a (guide portions) for guiding a belt-like member of a retainer, mentioned hereinlater, so as to extend in its axial direction (see FIG. 5).

The inner block 8 is formed with a U-shaped direction changing passage for circulating the balls by connecting the loaded ball rolling passage and the ball return passage. A circuit-shaped ball circulation passage is composed by the loaded ball return passage, the direction changing passage and the ball return passage. Four, two in each lateral side, rows of such ball circulation passages are formed. Each ball circulation passage is formed in one plane so that the balls circulate in the ball circulation passage two-dimensionally. To this ball circulation passage, a guide portion for guiding the belt-shaped portion of the retainer is arranged around the entire periphery.

The outer peripheral side of the direction changing passage is formed on the end plate 18 as an outer peripheral side constituting member of the direction changing passage, and the inner peripheral side of the direction changing passage is formed on the holding member as an inner peripheral side constituting member of the direction changing passage. By combining these end plate 18 and holding member 17, the guide groove (guide portion) for guiding the belt-like member of the retainer in the direction changing passage is formed.

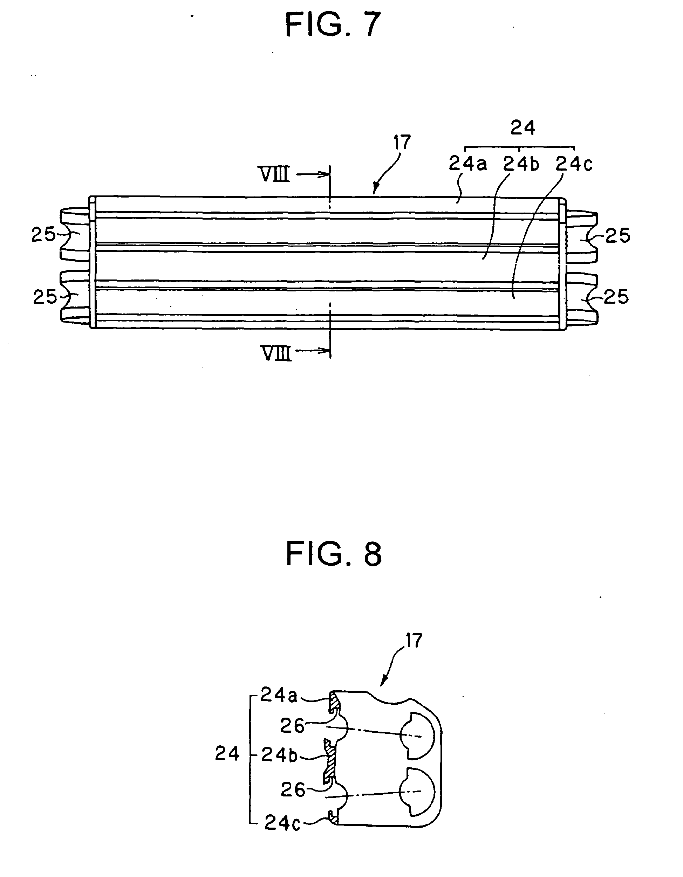

FIGs. 6 to 8 represent the holding member. The holding member 17 is provided with holding portions 24 extending along both side edges of the loaded ball rolling groove 19 and preventing the ball held by the retainer from coming off from the outer rail 7 at the time of removal of the inner block 8 from the outer rail 7 and provided with direction changing passage inner peripheral side constituting portions 25, constituting the inner peripheral side of the direction changing passage, disposed at longitudinal both end portions of the holding portions 24. When such holding member 24 is mounted to the block body 15, it cooperates with the outer side surface of the block body 15 to thereby form the guide portion 26 (guide groove) for guiding the belt-shaped member of the retainer.

The holding portion 24 includes a first holding piece 24c for holding the lower side of the retainer mounted to the lower side ball circulation passage, a second holding piece 24b for holding the upper side of the retainer mounted to the lower side ball circulation passage and mounted to the upper side ball circulation passage, and a third holding piece 24a for supporting the upper side of the retainer mounted to the upper side ball circulation passage. Each of the respective direction changing passage inner periphery constituting members 25 has an approximately semicircular-arc shape.

These holding members 17, 17, return passage constituting members 16 and end plates 18, 18 are independently formed from resin material, which are then assembled with the block body 15.

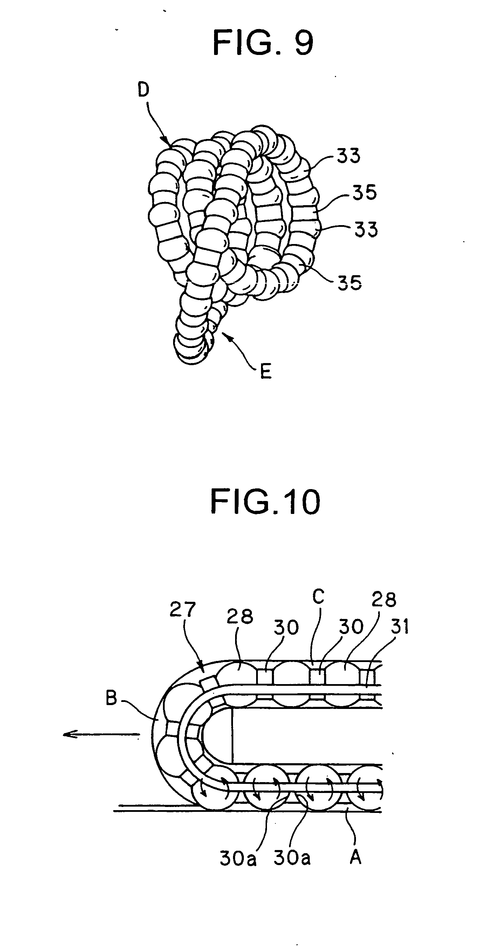

As shown in FIG. 2, a number of balls 28 supported by the retainer 27 to be rotatable and slidable are accommodated in each ball circulation passage. The retainer 27 is provided with a plurality of spacers 30 each disposed between the balls and belt-shaped members 31, 31 connecting both side edge portions of the respective spacers 30, 30 (see FIG. 10). The spacers 30 are formed so as to provide a cylindrical shape having an outer diameter smaller than a diameter of the ball 28. Each of the spacers 30 is formed, at its axial both ends, with spherical recessed portions 30a, 30a as curved recesses each having a curvature radius substantially equal to the radius of the ball 28 so as to correspond thereto. In an arrangement that the spacers 30 are disposed between the balls 28, the axes of the spacers 30 lie on the line connecting the centers of the balls 28. The axial length of the spacer 30 is set to be thin so that the interval of the adjacent balls 28, 28 has necessarily minimum value.

The belt-shaped members 31, 31 have constant thickness and are connected to both sides of the side surface of the spacer 30. These belt-shaped members 31, 31 have flexibility so as to flexibly cooperate with the direction changing passage. In an interfering position of the belt-shaped members 31, 31 and the balls 28, there is formed a cut-in portion having a curvature radius substantially equal to the radius of the ball 28. The belt-shaped members 31, 31 project over both the side edge portions of the balls 28, and the projected portions are guided by the guide portions formed in the ball circulation passages. Furthermore, corner portions of the longitudinal both end portions of belt-shaped members 31, 31 are formed so as to provide round portions 31a, 31a. The spacers 30 and the belt-shaped members 31, 31 are integrally formed from synthetic resin material through an injection molding process.

Hereunder, the screw portion of the linear actuator will be explained. As shown in FIG. 1, the screw shaft 9 penetrates the central portion of the inner block 8. On the outer peripheral surface of the screw shaft 9, there is formed a ball rolling groove 9a for the screw shaft 9 as rolling member rolling groove for the spiral screw shaft. This ball rolling groove 9a for the screw shaft 9 has a cross section formed into a gothic-arch including two circular-arc portions having a curvature radius slightly larger than the radius of a ball 33 for the screw shaft. On the other hand, the through hole formed in the block body 15 is also formed with a loaded ball rolling groove 15a for the screw shaft as loaded ball rolling member for the screw shaft so as to correspond to the ball rolling groove 9a for the screw shaft. This loaded ball rolling groove 15a for the screw shaft 9 also has a cross section formed into a gothic-arch including two circular-arc portions having a curvature radius slightly larger than the radius of the ball 33 for the screw shaft. A loaded rolling passage of the ball circulation passage is composed of the ball rolling groove 9a for the screw shaft 9 and the loaded ball rolling groove 15a of the block body 15.

The ball 33 contacts the ball rolling groove 9a for the screw shaft 9 at two points, and the ball 33 also contacts the loaded ball rolling groove 15a for the screw shaft of the block body 15 at two portions. That is, the ball 33 contacts the ball rolling groove 9a and the loaded ball rolling groove 15a at four points. Further, in order to apply a preload, there is adopted a so-called over-size system in which a ball having an over-size having a diameter slightly larger than the interval between the screw shaft 9 and the block body 15.

A return pipe 34 for circulating the ball rolling between the ball rolling groove 9a for the screw shaft 9 and the loaded ball rolling groove 15a for the block body 15 is provided with the inner block 8. This return pipe 34 constitutes a ball return passage for the screw shaft (rolling member return passage for screw shaft) communicating one and the other ends of the loaded rolling passage.

The return pipe 34 has a circular cross section and is bent by about 90 degrees at both end portions with respect to its body portion so as to provide an approximately gate shape. The leg portions thereof are not parallel to each other and their extending directions are twisted respectively in accordance with lead angles. Both the end portions of the return pipe 34 are formed with cutouts for scooping up the balls rolling in the loaded rolling passage. Both side portions of the return pipe 34 are fitted into the loaded rolling passage with several pitches of interval. Furthermore, this return pipe 34 is inserted from the lower surface side of the inner block 8, i.e. on a side opposing to the upper surface of the outer rail 7, and fixed to the inner block 8 by means of pipe holder. By disposing the return pipe 34 to the lower surface side of the inner block 8, a portion on the upper surface side of the inner block 8 can be freely utilized, thus making easy the assembling working of a table or like.

A number of balls 33 for screw shaft are arranged in the loaded rolling passage. A number of spacers 35 are also arranged each between the balls 33. The spacers 35 are formed so as to provide a cylindrical shape having an outer diameter smaller than a diameter of the ball 33. Each of the spacers 30 is formed, at its axial both ends, with spherical recessed portions as curved recesses each having a curvature radius substantially equal to the radius of the ball 33 so as to correspond thereto. In an arrangement that the spacers 35 are disposed between the balls 33, the axes of the spacers 35 lie on the line connecting the centers of the balls 23. The axial length of the spacer 35 is set to be thin so that the interval of the adjacent balls 33, 33 has necessarily minimum value.

When the screw shaft 9 is rotated, the balls 33 rolling in the circumferential direction in the loaded rolling passage under the loaded state are scooped up by one front end of both end portions of the return pipe 34. The scooped-up balls 33 pass through the inside of the return pipe 34 and return again to the loaded rolling passage from the other one front end of both the end portions of the return pipe part from the one end by several pitches. The balls 33 circulate in a manner reverse to that mentioned above by reversing the rotating direction of the screw shaft 9.

FIG. 9 shows a perspective view of the balls 33 and spacers 35 which are arranged in the ball circulation passage of the screw portion and FIG. 10 shows the balls 28 and retainer 27 which are arranged in the ball circulation passage of the guide portion. The arrangement of the spacers 35 and 30 having recessed portions corresponding to the curved surfaces of the balls 33 and 28 between these balls 33 and 28 permits to prevent the metal balls from being contacted to each other and realize a low dust and low noise generation structure.

As shown in FIG. 10, the balls 28 move two-dimensionally on a plane in the ball circulation passage of the guide portion. That is, the balls 28 circulate in the order of the linear loaded rolling passage A ⇒ the U-shaped direction changing passage B ⇒ the linear return passage C ⇒ the U-shaped direction changing passage B. In the direction changing passage B, the belt-shaped member 31 of the retainer is freely bent. Since a number of spacers 30 disposed in the guide portion are connected in series to each other by the belt-shaped members, the balls 28 can circulate in the predetermined track and, hence, unnecessary contacting of the balls 28 to the surrounding circulation passage can be prevented. Furthermore, since the belt-shaped members 31 are guided by the guide portions formed to the ball circulation passage, the belt-shaped members 31 can circulate in the more constant track, and hence, the spacers 30 connected in series by the belt-shaped members 31 and the balls 28 disposed between these spacers 30 can also circulate in the more constant track.

Particularly, in the case where the return passage constituting members 16, the holding members 17 and the end plates 18 are molded independently with resin material different from the metal block body, only the loaded rolling passage and the balls are metal-to-metal contacted. Thus, the generation of dust or like can be preferably suppressed.

On the other hand, with reference to FIG. 9, the loaded rolling passage D in the screw portion is formed into spiral shape and the ball return passage E (return pipe) is circumferentially twisted in the advancing direction of the balls 33 as mentioned before. That is, in the screw portion, the rolling directions of the balls 33 and spacers 35 are three-dimensionally changed and moved in the complicated manner. The unnecessary contacting of the balls 33 to the surrounding circulation passage can be prevented by separating the spacers 35 without connecting them with the belt-shaped member. In addition, the spacers 35, each having curved recesses at its both end portions corresponding to the curved surface of the ball 33, are arranged in the screw portion without using conventional spacer balls, so that the distance between the adjacent balls can be shortened in comparison with the case of using the spacer balls. Accordingly, the number of balls 33 which can receive the load is not reduced.

The linear actuator of the characters mentioned above will be assembled in the following manner with reference to FIG. 2.

First, the screw shaft 9 is inserted into the block body 15 and balls 33 and spacers 35 are then alternatively accommodated and arranged in the space between the screw shaft 9 and the block body 15. The balls 33 and spacers 35 are also accommodated and arranged in the return pipe 34. The return pipe 34 is then mounted to the block body 15. In thus manner, the assembling of the block body 15 and the screw shaft 9 is completed.

Next, the return passage constituting members 16 are inserted into the through holes 21 of the block body 15, and the holding members 17, 17 are assembled to both the side surfaces of the block body 15. Then, the end plate 18 is mounted to one end surface of the block body 15. In the next step, the balls 28 arranged and held by the retainer 27 is inserted in the ball circulation passage of the guide portion from the side opposing to the mounting side of the above-mentioned one end plate 18, and the other end plate 18 is thereafter mounted to the other one end surface of the block body 15. Finally, the inner block 8 is forcibly fitted into the outer rail 7 and the housings 13 and 14 supporting both the ends of the screw shaft are fastened to both ends of the outer rail 7.

Further, it is to be noted that tubular rollers may be used as rolling members in substitution for the balls.

As mentioned hereinbefore, according to the present invention, a plurality of spacers, each formed at its both ends, with curved recessed portions corresponding to the curved surface of the rolling member, are disposed between the rolling members of the guide portion, and these plural spacers are connected in series by the belt-shaped members having flexibility. On the other hand, a plurality of spacers, each formed at its both ends, with curved recessed portions corresponding to the curved surface of the rolling member, are disposed between the rolling members for the screw shaft of the screw portion in a manner separated from each other. The mutual contact between the respective metal rolling members can be prevented by disposing the spacers, having recessed portions corresponding to the curved surfaces corresponding to the rolling members, arranged in the guide portion and the screw portion. Furthermore, since the plural spacers arranged in the guide portion, in which two-dimensional motion is carried out, are connected to each other in series by the belt-shaped members, the rolling members circulate in the constant track, and unnecessary contacting of the rolling members and their surrounding circulation passage can be prevented. In the screw portion, the twisting motion around the advancing direction is required as well as the two-dimensional and three-dimensional direction changing motions, so that unnecessary contacting of the rolling members and their surrounding circulation passage can be prevented by separating the spacers without connecting the spacers by the belt-shaped members. Thus, since the mutual contact of the rolling members and the unnecessary contacting of the rolling members and their surrounding circulation passage can be prevented, low generation of dust or like and low generation of noise can be realized.

## Claims

1. A linear actuator comprising a track member (7), having U-shape in section, provided with inner wall surfaces (7a, 7a) opposing to each other, a movable member (8) disposed between the inner wall surfaces (7a, 7a)and a screw shaft (9) penetrating a through hole of the movable member (8), in which rolling member rolling portions (11) are formed on the inner wall surfaces of the track member (7); loaded rolling member rolling portions (19) are formed on both side surfaces of the movable member (8) so as to correspond to the rolling member rolling portions (11); rolling member return passages (C) extending in parallel to each other with a predetermined distance from the loaded rolling member rolling portions (19) and direction changing passages (B) each connecting the loaded rolling member rolling portions (19) and the rolling member return passages (C) are formed in the movable member (8) so as to circulate the rolling members (28) rolling between the rolling member rolling portions (11) and the loaded rolling member rolling portions (19); a rolling member rolling portion (9a) in form of a spiral is formed on the outer peripheral surface of the screw shaft (9); a loaded rolling member rolling portion (15a) is formed in the wall of the movable member (8) surrounding the through hole so as to correspond to the rolling member rolling portion (9a) of the screw shaft; and a rolling member return passage (E) for circulating the rolling member (33) rolling between the rolling member rolling portion (9a) of the screw shaft (9) and the loaded rolling member rolling portion (15a) of the movable member (8) is formed in the movable member (8),
wherein a plurality of first spacers (30), each having, at both ends thereof, curved recessed portions (30a) corresponding to curved surface of the rolling member (28) are arranged between the rolling members (28), the plural first spacers (30) being connected in series by belt-shaped members (31, 31) having flexibility;
a plurality of second spacers (35), each having, at both ends thereof, curved recessed portions corresponding to the curved surface of the rolling member (33), are disposed between the rolling members (33) for the screw shaft (9) in a manner separated from each other; and
a holding member (17) extending along both side edges of the loaded rolling member rolling portion (19) is mounted to the movable member (8) for preventing the rolling member (28) held by the belt-shaped members (31, 31) and the first spacers (30) from coming off at a time when the movable member is removed from the track member
**characterized in that** the holding member (17) is provided integrally with holding portions (24) extending along both side edges of the loaded rolling member rolling portion (19) and preventing the rolling member (28) held by the first spacers (30) from coming off at the time of removal of the movable member (8) from the track member (7), and provided with direction changing passage inner peripheral side constituting portions (25), constituting the inner peripheral side of the direction changing passage (B), disposed at longitudinal both end portions of the holding portions (24),
the holding portions (24) each include: a first holding piece (24c) for holding a lower side of the belt-shaped member (31) mounted to a lower side rolling member circulation passage; a second holding piece (24b) for holding the upper side of the belt-shaped member (31) mounted to the lower side rolling member circulation passage and mounted to an upper side rolling member circulation passage; and a third holding member (24a) for supporting the upper side of the belt-shaped member (31) mounted to the upper side rolling member circulation passage,
each of the direction changing passage inner periphery constituting members (25) has an approximately semicircular-arc shape,
each of the rolling member rolling portions (11) and the loaded rolling member rolling portions (19) is formed in a circular-arc in cross section,
each of the rolling member rolling portion (9a) of the screw shaft and the loaded rolling member rolling portion (15a) is formed in a gothic-arch in cross section,
four rows of loaded rolling member rolling passages constituted by the rolling member portions (11) and the loaded rolling member rolling portions (19) are formed,
contact angle lines of two upper side loaded rolling member rolling portions (11, 19) incline so as to be directed obliquely upward towards the outside from the center of the linear actuator, and contact angle lines of two lower side loaded rolling member rolling portions (11, 19) incline so as to be directed obliquely downward towards the outside from the center of the linear actuator.

2. The linear actuator according to claim 1, wherein the rolling member circulation passage composed of the loaded rolling member rolling portion (19, A), the rolling member return passage (C) and the direction changing passage (B) is provided with a guide portion (16a, 26) for guiding the belt-shaped member (31, 31).

3. The linear actuator according to claim 1 or 2, wherein a return passage constituting member (16) constituting the return passage (C), the direction changing inner periphery side constituting member (25) constituting the inner periphery side of the direction changing member (B), a direction changing outer periphery side constituting member (18) constituting the outer periphery side of the direction changing member (B), and the holding member (17) are each formed from a resin material independent from a body portion of the movable member (8).

## Patentansprüche

1. Ein linearer Aktuator oder Antrieb, aufweisend ein Führungs- bzw. Schienen- oder Spurelement (7), welches im Schnitt eine U-Form hat und welches mit inneren Wandflächen (7a, 7a) versehen ist, die einander gegenüberliegen, ein bewegliches Element (8), welches zwischen den inneren Wandflächen (7a, 7a) angeordnet ist, und einen Schraub- bzw. Gewindeschaft (9), welcher ein Durchgangsloch von dem beweglichen Element (8) durchdringt, wobei Rollelement-Rollabschnitte (11) an den inneren Wandflächen von dem Spurelement (7) geformt sind, wobei beladene oder belastete Rollelement-Rollabschnitte (19) an beiden Seitenflächen von dem beweglichen Element (8) geformt sind, um den Rollelement-Rollabschnitten (11) zu entsprechen, wobei Rollelement-Rückführdurchgänge (C), welche sich parallel zueinander mit einem vorbestimmten Abstand von den belasteten oder beladenen Rollelement-Rollabschnitten (19) erstrecken, und Richtungs-Änderungs-Durchgänge (B), welche die belasteten oder beladenen Rollelement-Rollabschnitte (19) und die Rollelement-Rückführdurchgänge (C) jeweils miteinander verbinden, in dem beweglichen Element (8) geformt sind, um die Roll- oder Wälzelemente (28) zu zirkulieren, welche zwischen den Rollelement-Rollabschnitten (11) und den belasteten oder beladenen Rollelement-Rollabschnitten (19) rollen, wobei ein Rollelement-Rollabschnitt (9a) in Form einer Spirale an der äußeren Umfangsfläche von dem Schraubenschaft (9) geformt ist, wobei ein belasteter oder beladener Rollelement-Rollabschnitt (15a) in der Wand von dem beweglichen Element (8) geformt ist, welche das Durchgangsloch umgibt, um dem Rollelement Rollabschnitt (9a) von dem Schraubenschaft zu entsprechen, und wobei ein Rollelement-Rückführdurchang (E) zum Zirkulieren des Roll- bzw. Wälzelements (33), welches zwischen dem Rollelement-Rollabschnitt (9a) von dem Schraubenschaft (9) und dem beladenen oder belasteten Rollelement-Rollabschnitt (15a) von dem beweglichen Element (8) rollt, in dem beweglichen Element (8) geformt ist,
wobei eine Mehrzahl von ersten Abstandhaltern (30), welche jeweils gekrümmte ausgesparte Abschnitte (30a) an den beiden Enden davon haben, entsprechend der gekrümmten Fläche von dem Rollelement (28), zwischen den Rollelementen (28), angeordnet ist, wobei die mehreren ersten Abstandshalter (30) mittels Gurt- bzw. Band-förmiger Elemente (31, 31) mit Flexibilität in Serie bzw. Reihe verbunden sind,
wobei eine Mehrzahl von zweiten Abstandshaltern (35), welche jeweils gekrümmte ausgesparte Abschnitte an den beiden Enden davon haben, entsprechend der gekrümmten Fläche von dem Rollelement (33), zwischen den Rollelementen (33) für den Schraubenschaft (9) in einer voneinander getrennten Art angeordnet ist, und
wobei ein Halteelement (17), welches sich entlang beider Seitenränder von dem beladenen oder belasteten Rollelement-Rollabschnitt (19) erstreckt, an dem beweglichen Element (8) montiert ist zum Verhindern, dass sich das Rollelement (28), welches von den Gurt-förmigen Elementen (31, 31) und den ersten Abstandshaltern (30) gehalten wird, löst oder herausfällt zu einer Zeit, wenn das bewegliche Element von dem Spurelement entfernt ist bzw. wird,
**dadurch gekennzeichnet, dass** das Halteelement (17) integral mit Halteabschnitten (24) versehen ist, welche sich entlang beider Seitenrander von dem beladenen oder belasteten Rollelement-Rollabschnitt (19) erstrecken und verhindern, dass sich das Rollelement (28), welches von den ersten Abstandshaltern (30) gehalten ist, löst bzw. herausfällt zu einer Zeit des Entfernens des beweglichen Elements (8) von dem Spurelement (7), sowie mit Richtungs-Änderungs-Durchgang-, innere-Umfangsseite-Formabschnitten (25) versehen ist, welche die innere Umfangsseite von dem Richtungs-Änderungs-Abschnitt (B) ausmachen und welche an den beiden Längsendabschnitten von den Halteabschnitten (24) angeordnet sind,
wobei die Halteabschnitte (24) jeweils umfassen: ein erstes Haltestuck (24c) zum Halten einer unteren Seite von dem Gurt-förmigen Element (31), welches an einem untere-Seite-Rollelement-Zirkulationsdurchgang montiert ist, ein zweites Haltestück (24b) zum Halten der oberen Seite von dem Gurt-förmigen Element (31), welches an dem untere-Seite-Rollelement-Zirkulationsdurchgang und einem obere-Seite-Rollelement-Zirkulationsdurchgang montiert ist, sowie ein drittes Halteelement (24a) zum Stützen der oberen Seite von dem Gurt-förmigen Element (31), welches an dem obere-Seite-Rollelemsnt-Zirkulationsdurchgang montiert ist,
wobei jedes von den Richtungs-Änderungs-Durchgang-innerer-Umfang-Formelementen (25) eine ungefähre oder annähernde Halbkreisbogen-Form hat,
wobei jeder von den Rollelement-Rollabschnitten (11) und den beladenen oder belasteten Rollelement-Rollabschnitten (19) im Querschnitt in einem Kreisbogen geformt ist,
wobei jeder von dem Rollelement-Rollabschnitt (9a) des Schraubenschafts und dem belasteten oder beladenen Rollelement-Rollabschnitt (15a) im Querschnitt in einem Gotik-Bogen geformt ist,
wobei vier Reihen von beladenen oder belasteten Rollelement-Rolldurchgängen geformt sind, welche von den Rollelementabschnitten (11) und den beladenen oder belasteten Rollelement-Rollabschnitten (19) gebildet sind,
wobei Kontaktwinkellinien von zwei obere-Seite-belasteter/beladener-Rollelement-Rollabschnitten (11, 19) geneigt sind, um von der Mitte des linearen Aktuators bzw. Antriebs schräg nach oben in Richtung zu der Außenseite gerichtet zu sein, und Kontaktwinkellinien von zwei unterSeite-belasteter/beladener-Rollelement-Rollabschnitten (11, 19) geneigt sind, um von der Mitte des linearen Aktuators bzw. Antriebs schräg nach unten in Richtung zu der Außenseite gerichtet zu sein.

2. Der lineare Aktuator bzw. Antrieb gemäß Anspruch 1, wobei der Rollelement-Zirkulations-Durchgang, der aus dem belasteten bzw. beladenen Rollelement-Rollabschnitt (19, A), dem Rollelement-Rückführ-Durchgang (C) und dem Richtungs-Änderungs-Durchgang (B) gebildet ist, mit einem Führungsabschnitt (16a, 26) zum Führen des Gurt-förmigen Elements (31, 31) versehen ist.

3. Der lineare Aktuator bzw. Antrieb gemäß Anspruch oder Anspruch 2, wobei ein Rückführ-Durchgang-Formelement (16), welches den Rückführ-Durchgang (C) formt, das Richtungs-Änderungs-innere-Umfangsseite-Formelement (25), welches die innere Umfangsseite von dem Richtungs-Änderungs-Element (B) ausmacht, ein Richtungs-Änderungs-äußere-Umfangsseite-Formelement (18), welches die äußere Umfangsseite von dem Richtungs-Änderungs-Element (B) ausmacht, und das Halteelement (17) jeweils aus einem Harzmaterial geformt sind, unabhängig von einem Körperabschnitt von dem beweglichen Element (8).

## Revendications

1. Actionneur linéaire comprenant un élément de voie (7), qui présente une section en forme de U, doté de surfaces de parois intérieures (7a, 7a) opposées l'une à l'autre, un élément mobile (8) disposé entre les surfaces de parois intérieures (7a, 7a) et une tige de vis (9) qui pénètre dans un trou traversant de l'élément mobile (8), dans lequel des parties de roulement d'élément de roulement (11) sont formées sur les surfaces de parois intérieures de l'élément de voie (7) ; des parties de roulement d'élément de roulement chargé (19) sont formées sur les surfaces latérales de l'élément mobile (8) de façon à correspondre aux parties de roulement d'élément de roulement (11); des passages de retour d'élément de roulement (C) qui s'étendent parallèles les uns aux autres avec une distance prédéterminée à partir des parties de roulement d'élément de roulement chargé (19) et des passages dé changement de direction (B) chacun d'eaux reliant les parties de roulement d'élément de roulement chargé (19) et les passages de retour d'élément de roulement (C) sont formés dans l'élément mobile (8) de façon à faire circuler les éléments de roulement (28) qui roulent entre les parties de roulement d'élément de roulement (11) et les parties de roulement d'élément de roulement chargé (19) ; une partie de roulement d'élément de roulement (9a) en forme de spirale est formée sur la surface périphérique extérieure de la tige de vis (9) ; une partie de roulement d'élément de roulement chargé (15a) est formée dans la paroi de l'élément mobile (8) qui entoure le trou traversant de façon à correspondre à la partie de roulement d'élément de roulement (9a) de la tige de vis ; et un passage de retour d'élément de roulement (E) destiné à faire circuler l'élément de roulement (33) qui roule entre la partie de roulement d'élément de roulement (9a) de la tige de vis (9) et la partie de roulement d'élément de roulement chargé (15a) de l'élément mobile (8) est formée dans l'élément mobile (8) ;
dans lequel une pluralité de premières entretoises (30), chacune d'elles présentant, au niveau de ses extrémités, des parties évidées incurvées (30a) qui correspondent à une surface incurvée de l'élément de roulement (28), sont agencées entre les éléments de roulement (28), les premières entretoises (30) étant reliées en série par des éléments en forme de courroie (31, 31) qui présentent une flexibilité ;
une pluralité de secondes entretoises (35), chacune d'elles présentant, au niveau de ses extrémités, des parties évidées incurvées qui correspondent à la surface incurvée de l'élément de roulement (33), sont disposées entre les éléments de roulement (33) de la tige de vis (9) d'une façon séparée les unes des autres ; et
un élément de maintien (17) qui s'étend le long des bords latéraux de la partie de roulement d'élément de roulement chargé (19), est monté sur l'élément mobile (8) de façon à empêcher l'élément de roulement (28) maintenu par les éléments en forme de courroie (31, 31) et les premières entretoises (30) de se dégager au moment où l'élément mobile est retiré de l'élément de voie ;
**caractérisé en ce que** l'élément de maintien (17) est fourni d'une pièce avec des parties de maintien (24) qui s'étendent le long des bords latéraux de la partie de roulement d'élément de roulement chargé (19) et empêchent l'élément de roulement (28) maintenu par les premières entretoises (30) de se dégager au moment du retrait de l'élément mobile (8) de l'élément de voie (7), et fourni avec des parties constitutives de côté périphérique intérieur de passage de changement de direction (25), qui constituent le côté périphérique intérieur du passage de changement de direction (B), disposées au niveau des parties d'extrémités longitudinales des parties de maintien (24) ;
chacune des parties de maintien (24) comprend : une première pièce de maintien (24c) destinée à maintenir un côté inférieur de l'élément en forme de courroie (31) monté sur un passage de circulation d'élément de roulement latéral inférieur ; une deuxième pièce de maintien (24b) destinée à maintenir le côté supérieur de l'élément en forme de courroie (31) monté sur le passage de circulation d'élément de roulement latéral inférieur et monté sur un passage de circulation d'élément de roulement latéral supérieur ; et un troisième élément de maintien (24a) destiné à supporter le côté supérieur de l'élément en forme de courroie (31) monté sur le passage de circulation d'élément de roulement latéral supérieur ;
chacun des éléments constitutifs de périphérie intérieure de passage de changement de direction (25) présente approximativement une forme d'arc semi-circulaire ;
chacune des parties de roulement d'élément de roulement (11) et des parties de roulement d'élément de roulement chargé (19) présente une section, transversale en forme d'arc circulaire ;
chacune de la partie de roulement d'élément de roulement (9a) de la tige de vis et de la partie de roulement d'élément de roulement chargé (15a) présente une section transversale en forme d'arc gothique ;
quatre rangées de passages de roulement d'élément de roulement chargé constituées par les parties d'élément de roulement (11) et les parties de roulement d'élément de roulement chargé (19) sont formées ;
les lignes d'angle de contact de deux parties de roulement d'élément de roulement chargé latérales supérieures (11, 19) s'inclinent de façon à être dirigées de manière oblique vers le haut vers l'extérieur à partir du centre de l'actionneur linéaire, et les lignes d'angle de contact de deux parties de roulement d'élément de roulement chargé latérales inférieures (11, 19) s'inclinent de façon à être dirigées de manière oblique vers le bas vers l'extérieur partir du centre de l'actionneur linéaire.

2. Actionneur linéaire selon la revendication 1, dans lequel de circulation d'élément de roulement constitué par la partie de roulement d'élément de roulement chargé (19, A), le passage de retour d'élément de roulement (C) et le passage de changement de direction (B), est doté d'une partie de guidage (16a, 26) destinée à guider l'élément en forme de courroie (31,31).

3. Actionneur linéaire selon la revendication 1 ou la revendication 2, dans lequel un élément constitutif de passage de retour (16) constituant le passage de retour (C), l'élément constitutif de côté de périphérie intérieure de changement de direction (25) constituant le côté de périphérie intérieure de l'élément de changement de direction (B), un élément constitutif de côté de périphérie extérieure de changement de direction (18) constituant le côté de périphérie extérieure de l'élément de changement de direction (B), et l'élément de maintien (17) sont chacun réalisés dans un matériau de résine indépendant d'une partie de corps de l'élément mobile (8).
